# EUROPEAN PATENT APPLICATION

(11) **EP 4 694 254 A1**
(43) Date of publication of application: **11.02.2026**
(21) Application number: 24919156.0
(22) Date of filing: 04.09.2024
(51) Int. Cl.: H04W 12/041, H04L 9/32, H04L 9/08

(54) **5G ENCRYPTED COMMUNICATION METHOD AND APPARATUS, ELECTRONIC DEVICE AND STORAGE MEDIUM**

(30) Priority: 11.06.2024 CN 202410743331
(71) Applicant: Electric Power Research Institute, China Southern Power Grid, Guangzhou, Guangdong 510663 (CN)
(72) Inventor: WANG, Tao, Guangzhou, Guangdong 510663 (CN); ZHOU, Baorong, Guangzhou, Guangdong 510663 (CN); ZHAO, Wenmeng, Guangzhou, Guangdong 510663 (CN); MAO, Tian, Guangzhou, Guangdong 510663 (CN)
(74) Representative: von Hirschhausen, Helge
(86) International application number: PCT/CN2024/116718
(87) International publication number: WO 2025/255973

(57) **Abstract**

A 5G encrypted communication method and apparatus, an electronic device, and a storage medium are provided, relating to the technical field of communications, to address the problems in related conventional technologies such as a high communication encryption transmission cost, poor compatibility between encryption chip and terminal device, and low security. The method includes: interacting with a master station through random-number based mutual encryption to generate a session key, encrypting the session key, and transmitting the encrypted session key to the master station to establish an encrypted data transmission tunnel between a 5G secure communication module and the master station; performing a mutual identity authentication between the 5G secure communication module and the master station based on the session key; and performing encryption and decryption communication on application layer data between the client device and the master station by using the session key if the mutual identity authentication passes. By establishing the encrypted data transmission tunnel and performing the mutual identity authentication, dual encryption of an application layer and a link layer is constructed, further improving the security of data transmission.

## Description

This application claims the priority to Chinese Patent Application No.202410743331.8, titled "5G ENCRYPTED COMMUNICATION METHOD AND APPARATUS, ELECTRONIC DEVICE, AND STORAGE MEDIUM", filed on June 11, 2024 with the China National Intellectual Property Administration, which is incorporated herein by reference in its entirety.

### FIELD

The present disclosure relates to the technical field of communications, and in particular to a 5G encrypted communication method and apparatus, an electronic device, and a storage medium.

### BACKGROUND

The construction and application of new-type power systems and virtual power plants are inseparable from business collaboration and interaction of multiple access terminal sides such as photovoltaics, energy storage, adjustable loads, and charging piles. During a data interaction process, a system often applies secure and efficient communication methods to meet the requirements of various terminals for information exchange, interface adaptation and secure access. In conventional technologies, a built-in security chip or an external security encryption box are usually used to achieve dedicated encrypted transmission for a power terminal device.

However, in practice, a printed circuit board (PCB) is modified when the built-in security chip is applied to the terminal, which increases cost. In addition, some terminals may not be compatible with the pins of the security chip, making the technical modification impossible and requiring a complete redesign, resulting in poor compatibility.

The cost of the external security encryption box may reach several thousand yuan. In the context of massive heterogeneous load-side resources access in the new-type power system, the large number of required encryption boxes leads to high data encryption and decryption transmission costs, which is economically unviable. Moreover, the extensive use of encryption boxes may easily lead to mismanagement, resulting in significant data transmission security risks and low security.

### SUMMARY

A 5G encrypted communication method and apparatus, an electronic device, and a storage medium are provided according to the present disclosure, to address the problems in related conventional technologies such as a high communication encryption transmission cost, poor compatibility between an encryption chip and a terminal device, and low security.

A 5G encrypted communication method is provided according to the present disclosure. The 5G encrypted communication method is applied to a client device, which includes a 5G secure communication module, where the 5G encrypted communication method includes:
interacting with a master station through random-number based mutual encryption to generate a session key, encrypting the session key, and transmitting the encrypted session key to the master station to establish an encrypted data transmission tunnel between the 5G secure communication module and the master station;
performing a mutual identity authentication between the 5G secure communication module and the master station based on the session key; and
performing encryption and decryption communication on application layer data between the client device and the master station by using the session key in response to the mutual identity authentication passing.

In an embodiment, the 5G secure communication module internally integrates an encryption chip, and the interacting with a master station through random-number based mutual encryption to generate a session key includes:
transmitting a client registration message to the master station, where the client registration message includes a local random number randomly generated by the encryption chip;
receiving a registration response message returned by the master station performing a registration verification based on the client registration message, where the registration response message includes a gateway random number randomly generated by the master station and a first public key certificate of the master station;
performing a legitimacy verification on the first public key certificate, and transmitting, after the legitimacy verification passes, a second public key certificate of the 5G secure communication module to the master station, to enable the master station to invoke a CA server of a power grid dispatching department to perform a security verification on the second public key certificate; and
receiving a security verification passing result from the master station, and generating the session key via the encryption chip through a password digest algorithm based on the local random number, the gateway random number and a master control key of the encryption chip.

In an embodiment, encrypting the session key, and transmitting the encrypted session key to the master station to establish an encrypted data transmission tunnel between the 5G secure communication module and the master station includes:
encrypting the session key by using the first public key certificate to obtain a secondary encrypted session key; and
transmitting the secondary encrypted session key to the master station via a public network, to enable the master station to:
   decrypt the secondary encrypted session key by using a first private key certificate to obtain the session key,
to establish the encrypted data transmission tunnel between the 5G secure communication module and the master station.

In an embodiment, the performing a mutual identity authentication between the 5G secure communication module and the master station based on the session key includes:
invoking the encryption chip to obtain a first encryption random number;
encrypting the first encryption random number by using the session key to generate a first ciphertext;
transmitting the first ciphertext to the master station;
receiving a third ciphertext transmitted by the master station, where the third ciphertext is obtained by: the master station decrypting the first ciphertext by using the session key to obtain the first encryption random number, invoking a cipher machine to encrypt the first encryption random number to obtain a second ciphertext, and encrypting the second ciphertext by using the session key;
decrypting the third ciphertext by using the session key to obtain the second ciphertext;
performing a master station identity authentication on the second ciphertext via the encryption chip, and determining that the master station is a trusted master station in response to the master station identity authentication passing;
receiving a fourth ciphertext transmitted by the master station, where the fourth ciphertext is obtained by: the master station randomly generating a second encryption random number and encrypting the second encryption random number by using the session key;
decrypting the fourth ciphertext by using the session key to obtain the second encryption random number;
encrypting the second encryption random number via the encryption chip to obtain a fifth ciphertext; and
transmitting the fifth ciphertext to the master station, to enable the master station to:
   perform a client identity authentication on the fifth ciphertext through two continuous encryption and decryption authentications, and
   determine that the client device is a trusted client device in response to the client identity authentication passing.

In an embodiment, the 5G secure communication module further includes a baseband chip, and the performing encryption and decryption communication on application layer data between the client device and the master station by using the session key includes:
obtaining first to-be-transmitted data when the client device transmits data to the master station, and performing data segmentation, encryption, and data concatenation on the first to-be-transmitted data in sequence via the baseband chip and the encryption chip to obtain first complete ciphertext data;
performing a secondary encryption on the first complete ciphertext data by using the session key to obtain second complete ciphertext data; and
transmitting the second complete ciphertext data to the master station to enable the master station to:
   decrypt the second complete ciphertext data by using the session key to obtain the first complete ciphertext data, and invoke a cipher machine to decrypt the first complete ciphertext data to obtain the first to-be-transmitted data.

In an embodiment, the 5G secure communication module further includes a baseband chip, and the performing encryption and decryption communication on application layer data between the client device and the master station by using the session key includes:
receiving fourth complete ciphertext data transmitted by the master station, where the fourth complete ciphertext data is obtained by: the master station invoking a cipher machine to encrypt second to-be-transmitted data to obtain third complete ciphertext data, and encrypting the third complete ciphertext data by using the session key;
decrypting the fourth complete ciphertext data by using the session key to obtain the third complete ciphertext data; and
performing data segmentation, decryption, and data concatenation on the third complete ciphertext data in sequence via the baseband chip and the encryption chip to obtain the second to-be-transmitted data.

In an embodiment, the 5G encrypted communication method further includes:
performing offline distributing and writing of encryption and decryption keys on the 5G secure communication module via a key management system, and distributing a first CA certificate, where the first CA certificate includes the second public key certificate of the 5G secure communication module.

A 5G encrypted communication method is provided according to the present disclosure, and the 5G encrypted communication method is applied to a master station. The master station is communicatively connected to at least one client device. Each of the at least one client device includes a 5G secure communication module, and for any one of the at least one client device, the 5G encrypted communication method includes:
interacting with the client device through random-number based mutual encryption to enable the client device to generate a session key;
establishing an encrypted data transmission tunnel between the master station and the 5G secure communication module based on the session key;
performing a mutual identity authentication between the 5G secure communication module and the master station based on the session key; and
performing encryption and decryption communication on application layer data between the client device and the master station by using the session key in response to the mutual identity authentication passing.

In an embodiment, the establishing an encrypted data transmission tunnel between the master station and the 5G secure communication module based on the session key includes:
receiving a secondary encrypted session key transmitted by the client device, where the secondary encrypted session key is obtained by the client device encrypting the session key; and
decrypting the secondary encrypted session key to obtain the session key, to establish the encrypted data transmission tunnel between the master station and the 5G secure communication module.

In an embodiment, the 5G secure communication module internally integrates an encryption chip, the master station includes an SSL gateway device, and the interacting with the client device through random-number based mutual encryption to enable the client device to generate a session key includes:
receiving a client registration message transmitted by the client device, where the client registration message includes a local random number, and the local random number is randomly generated by the encryption chip;
performing a registration verification on the client registration message, and randomly generating, after the registration verification passes, a gateway random number via the SSL gateway device;
integrating the gateway random number and a first public key certificate of the master station into a registration response message, and transmitting the registration response message to the client device to enable the client device to perform a legitimacy verification on the first public key certificate;
receiving a second public key certificate of the 5G secure communication module transmitted by the client device after the legitimacy verification passes, and invoking a CA server of a power grid dispatching department to perform a security verification on the second public key certificate; and
transmitting, in response to the security verification passing, a security verification result to the client device to enable the client device to:
   generate the session key via the encryption chip through a password digest algorithm based on the local random number, the gateway random number and a master control key of the encryption chip.

In an embodiment, the master station corresponds to a first private key certificate, and the decrypting the secondary encrypted session key to obtain the session key, to establish the encrypted data transmission tunnel between the master station and the 5G secure communication module includes:
decrypting the secondary encrypted session key by using the first private key certificate to obtain the session key, to establish the encrypted data transmission tunnel between the master station and the 5G secure communication module.

In an embodiment, the performing a mutual identity authentication between the 5G secure communication module and the master station based on the session key includes:
receiving a first ciphertext transmitted by the client device, where the first ciphertext is obtained by: the client device invoking the encryption chip to obtain a first encryption random number and encrypting the first encryption random number by using the session key;
decrypting the first ciphertext by using the session key to obtain the first encryption random number;
invoking a cipher machine to encrypt the first encryption random number to obtain a second ciphertext;
encrypting the second ciphertext by using the session key to obtain a third ciphertext;
transmitting the third ciphertext to the client device to enable the client device to:
   decrypt the third ciphertext by using the session key to obtain the second ciphertext, perform a master station identity authentication on the second ciphertext via the encryption chip, and determine that the master station is a trusted master station in response to the master station identity authentication passing;
randomly generating a second encryption random number, encrypting the second encryption random number by using the session key to obtain a fourth ciphertext, and transmitting the fourth ciphertext to the client device;
receiving a fifth ciphertext transmitted by the client device, where the fifth ciphertext is obtained by: the client device decrypting the fourth ciphertext by using the session key to obtain the second encryption random number, and encrypting the second encryption random number via the encryption chip; and
performing a client identity authentication on the fifth ciphertext through two continuous encryption and decryption authentications, and determining that the client device is a trusted client device in response to the client identity authentication passing.

In an embodiment, the 5G secure communication module further includes a baseband chip, and the performing encryption and decryption communication on application layer data between the client device and the master station by using the session key includes:
receiving second complete ciphertext data transmitted by the client device, where the second complete ciphertext data is obtained by: the client device performing data segmentation, encryption, and data concatenation on first to-be-transmitted data via the baseband chip and the encryption chip to obtain first complete ciphertext data, and performing a secondary encryption on the first complete ciphertext data by using the session key;
decrypting the second complete ciphertext data by using the session key to obtain the first complete ciphertext data; and
invoking a cipher machine to decrypt the first complete ciphertext data to obtain the first to-be-transmitted data.

In an embodiment, the 5G secure communication module further includes a baseband chip, and the performing encryption and decryption communication on application layer data between the client device and the master station by using the session key includes:
obtaining second to-be-transmitted data when the master station transmits data to the client device;
invoking a cipher machine to encrypt the second to-be-transmitted data to obtain third complete ciphertext data;
encrypting the third complete ciphertext data by using the session key to obtain fourth complete ciphertext data; and
transmitting the fourth complete ciphertext data to the client device to enable the client device to:
   decrypt the fourth complete ciphertext data by using the session key to obtain the third complete ciphertext data, and perform data segmentation, decryption, and data concatenation on the third complete ciphertext data in sequence via the baseband chip and the encryption chip to obtain the second to-be-transmitted data.

In an embodiment, the 5G encrypted communication method further includes:
performing offline distributing and writing of encryption and decryption keys on the cipher machine of the master station via a key management system, and distributing a second CA certificate, where the second CA certificate includes the first public key certificate and the first private key certificate of the master station.

A 5G encrypted communication apparatus is provided according to the present disclosure, and the 5G encrypted communication apparatus is applied to a client device. The client device includes a 5G secure communication module. The apparatus includes a first encrypted tunnel establishment module, a first mutual identity authentication module, and a first encryption and decryption communication module.

The first encrypted tunnel establishment module is configured to interact with a master station through random-number based mutual encryption to generate a session key, encrypt the session key, and transmit the encrypted session key to the master station to establish an encrypted data transmission tunnel between the 5G secure communication module and the master station.

The first mutual identity authentication module is configured to perform a mutual identity authentication between the 5G secure communication module and the master station based on the session key.

The first encryption and decryption communication module is configured to perform encryption and decryption communication on application layer data between the client device and the master station by using the session key in response to the mutual identity authentication passing.

A 5G encrypted communication apparatus is provided according to the present disclosure, and the 5G encrypted communication apparatus is applied to a master station. The master station is communicatively connected to at least one client device. Each of the at least one client device includes a 5G secure communication module, and for any one of the at least one client device, the apparatus includes a random-number based mutual encryption module, a second encrypted tunnel establishment module, a second mutual identity authentication module, and a second encryption and decryption communication module.

The random-number based mutual encryption module is configured to interact with the client device through random-number based mutual encryption to enable the client device to generate a session key.

The second encrypted tunnel establishment module is configured to establish an encrypted data transmission tunnel between the master station and the 5G secure communication module based on the session key.

The second mutual identity authentication module is configured to perform a mutual identity authentication between the 5G secure communication module and the master station based on the session key.

The second encryption and decryption communication module is configured to perform encryption and decryption communication on application layer data between the client device and the master station by using the session key in response to the mutual identity authentication passing.

An electronic device is provided according to the present disclosure. The electronic device includes a processor and a memory. The memory is configured to store program codes and transmit the program codes to the processor. The processor is configured to perform the above 5G encrypted communication method based on an instruction in the program codes.

A computer-readable storage medium is provided according to the present disclosure, and the computer-readable storage medium stores program codes. The program codes are to perform the above 5G encrypted communication method.

It can be seen from the above technical solutions that the present disclosure has the following advantages.

A 5G encrypted communication method is provided according to the present disclosure. During a data communication process, the client device interacts with a master station through random-number based mutual encryption to generate a session key, encrypts the session key, and transmits the encrypted session key to the master station to establish an encrypted data transmission tunnel between a 5G secure communication module and the master station. A mutual identity authentication is performed between the 5G secure communication module and the master station based on the session key. Encryption and decryption communication is performed on application layer data between the client device and the master station by using the session key in response to the mutual identity authentication passing. By establishing the encrypted data transmission tunnel and performing the mutual identity authentication, dual encryption of an application layer and a link layer is constructed, further improving the security of data transmission.

### BRIEF DESCRIPTION OF THE DRAWINGS

In order to more clearly illustrate the embodiments of the present disclosure or the technical solutions in the conventional technology, the drawings needed to be used in the description of the embodiments or the conventional technology are briefly introduced below. Apparently, the drawings described below are only some embodiments of the present disclosure, and other drawings can be obtained based on these drawings without creative work for those skilled in the art.
FIG. 1 is a schematic diagram showing an overall design framework of a 5G encrypted communication method;
FIG. 2 is a flowchart showing steps of a 5G encrypted communication method;
FIG. 3 is a schematic diagram showing a process of a mutual identity authentication between a 5G secure communication module and a master station;
FIG. 4 is a schematic diagram showing a process of encryption and decryption communication for application layer data between a client device and a master station;
FIG. 5 is a flowchart showing steps of another 5G encrypted communication method;
FIG. 6 is a structural block diagram of a 5G encrypted communication apparatus; and
FIG. 7 is a structural block diagram of another 5G encrypted communication apparatus.

### DETAILED DESCRIPTION

A 5G encrypted communication method and apparatus, an electronic device, and a storage medium are provided according to the embodiments of the present disclosure, to address the problems in related conventional technologies such as a high communication encryption transmission cost, poor compatibility between an encryption chip and a terminal device, and low security.

In order to make the objectives, features and advantages of the present disclosure more apparent and easier to be understood, technical solutions in the embodiments of the present disclosure are described clearly and completely below with reference to the drawings in the embodiments of the present disclosure. It is apparent that the described embodiments are only some embodiments of the present disclosure, rather than all embodiments. Based on the embodiments in the present disclosure, all of the other embodiments which are obtained by those skilled in the art without any creative work fall within the protection scope of the present disclosure.

As an example, in conventional technologies, a built-in security chip or an external security encryption box is typically used for dedicated encrypted transmission for power terminal devices.

However, in practice, a printed circuit board (PCB) is modified when the built-in security chip is applied to the terminal, which increases cost. In addition, some terminals may not be compatible with the pins of the security chip, making the technical modification impossible and requiring a complete redesign, resulting in poor compatibility.

The cost of the external security encryption box may reach several thousand yuan. In the context of massive heterogeneous load-side resources access in the new-type power system, the large number of required encryption boxes leads to high data encryption and decryption transmission costs, which is economically unviable. Moreover, the extensive use of encryption boxes may easily lead to mismanagement, resulting in significant data transmission security risks and low security.

Therefore, one of the core inventive points of the embodiments of the present disclosure is as follows. First, the processing capability of a built-in 5G baseband chip in a 5G communication module is fully reused and a power-specific encryption chip is directly integrated into the 5G communication module, eliminating the need for a separate PCB modification in a power terminal device, custom software development for a terminal, and an additional independent encryption box, thereby achieving rapid compatibility and significantly reducing costs. Second, based on the integration of the encryption chip into the 5G communication module, a 5G encrypted communication method is provided. During a data communication process, a client device interacts with a master station through random-number based mutual encryption to generate a session key, encrypts the session key and transmits the encrypted session key to the master station to establish an encrypted data transmission tunnel between a 5G secure communication module and the master station. A mutual identity authentication is performed between the 5G secure communication module and the master station based on the session key. Encryption and decryption communication is performed on application layer data between the client device and the master station by using the session key if the mutual identity authentication passes. By establishing the encrypted data transmission tunnel and performing the mutual identity authentication, dual encryption of an application layer and a link layer is implemented, further improving the security of data transmission. By combining the 5G secure communication module and the 5G encrypted communication method provided according to the present disclosure, interaction between the power terminal device and a power service is implemented, enabling remote security management of multiple different terminal devices. In addition, access status analysis and secure data transmission may be performed based on the 5G secure communication module, meeting the requirement for secure access of a distributed resource to a power service master station.

In practice, the 5G communication module lacks internal reserved design space for additional components, requiring re-layout and optimized design to embed an encryption module. Furthermore, to realize the encryption capability of the encryption module, the encryption module shares a platform with the communication module, necessitating optimization in software compatibility and business interaction.

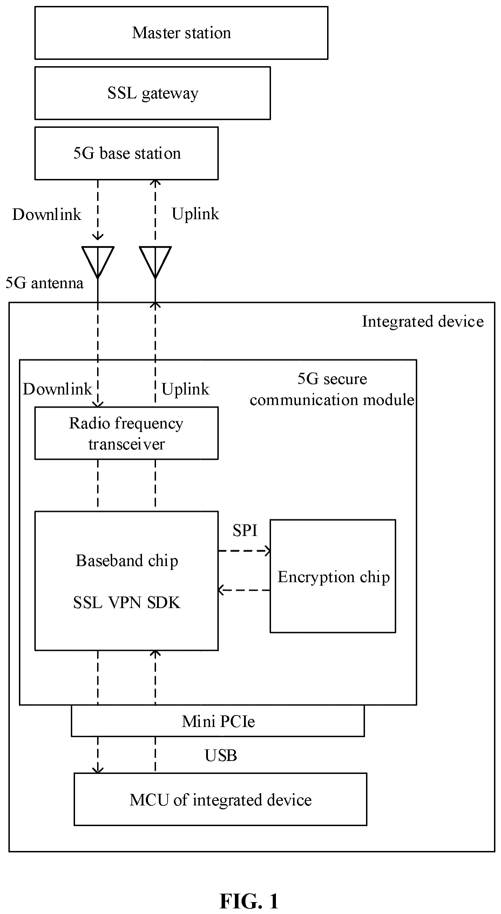

In view of the above, reference is made to FIG. 1. FIG. 1 is a schematic diagram showing an overall design framework of a 5G encrypted communication method.

Referring to FIG. 1, the overall design framework of the technical solution provided according to the present disclosure includes two parts: a master station (which includes a secure socket layer (SSL, a network security protocol) gateway device and a 5G base station), and a client device (which may be construed as an integrated device or a terminal; for data communication, the integrated device mainly includes a 5G secure communication module and a microcontroller unit (MCU) of the integrated device). The master station and the client device perform uplink or downlink data transmission via the 5G base station and 5G antenna.

The 5G secure communication module includes a radio frequency transceiver, a power-specific encryption chip, a baseband chip, and a secure socket layer virtual private network software development kit (SSL VPN SDK, which is a virtual private network software), where the baseband chip and the SSL VPN SDK may be considered integrated into a same module. A module where the baseband chip is located communicates with the encryption chip through a serial peripheral interface (SPI). The 5G secure communication module communicates with the MCU of the integrated device (a PCB motherboard of a power terminal device) through an existing M.2 interface (such as a USB) or a Mini PCIe physical interface, implementing hardware and software functional requirements of the power 5G communication module, thereby achieving the integration and upgrade of the encryption capability based on the communication module.

Combining the above explanation, a virtual power plant center is taken as an example, a business platform (corresponding to the master station) may be simultaneously connected to multiple different client devices, such as a test apparatus, or an integrated device with a built-in 5G security module through a gateway. The integrated device may be various types of distributed load devices, such as power terminal devices related to photovoltaics, charging piles, energy storage, or building loads.

In the embodiments of the present disclosure, a solution for the 5G secure communication module in 5G encrypted communication is provided. By fully reusing the processing capability of the built-in 5G baseband chip in the 5G communication module, a power-specific encryption chip is configured in a space reserved for an embedded-SIM (eSIM) chip in the 5G communication module, that is, the power-specific encryption chip is directly integrated into the 5G communication module, and an interface of the encryption chip is encapsulated at a software layer for an external invocation, thereby eliminating the need for a separate PCB modification in a power terminal device, custom software development for a terminal, and an additional independent encryption box. All encryption and decryption processes of the terminal are executed by the 5G communication module, reducing the adaptation difficulty between the encryption chip and terminal hardware, achieving rapid compatibility, and significantly reducing costs. Since the communication module is an essential functional module for the power terminal device, no additional hardware costs are added, meeting the requirements of massive heterogeneous load-side resource access and regulation in new-type power systems. By combining the 5G encrypted communication method provided according to the present disclosure, interaction between the power terminal device and a power service may be achieved, enabling remote security management for multiple different terminal devices. In addition, access status analysis and secure data transmission may be performed based on the 5G secure communication module, meeting the requirement for secure access of a distributed resource to a power service master station.

To help those skilled in the art better understand the technical solutions of the present disclosure, a 5G encrypted communication method applied to a client device is taken as an example for description below. The client device includes a 5G secure communication module.

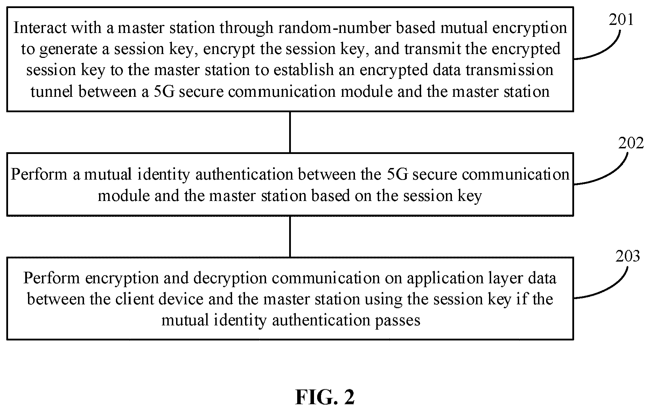

Referring to FIG. 2, FIG. 2 is a flowchart showing the steps of a 5G encrypted communication method according to an embodiment of the present disclosure, including the following steps 201 to 203.

In step 201, interaction is performed with a master station through random-number based mutual encryption to generate a session key, the session key is encrypted, and the encrypted session key is transmitted to the master station to establish an encrypted data transmission tunnel between the 5G secure communication module and the master station.

In practice, before the session key is generated through the random-number based mutual encryption, offline distributing and writing of encryption and decryption keys of the 5G secure communication module is performed by a key management system, and a first certificate authority (CA) certificate is distributed. The first CA certificate includes a public key certificate of the 5G secure communication module (that is, a second public key certificate involved in steps of the following embodiments) and a corresponding private key certificate.

In an embodiment, in conjunction with the master station, the key management system is mainly configured to perform the offline distributing and writing of keys on an encryption chip and a SSL VPN SDK in the 5G secure communication module, and a cipher machine of the master station. Each of the above devices is distributed with three keys, including a master control key, an encryption key, and a decryption key. In this step, a symmetric encryption key is written, and an encryption algorithm used during data encryption and decryption communication may be a commonly used SM4 symmetric encryption algorithm. In addition, a CA certificate system (also referred to as a CA server) may distribute CA certificates (including a public key certificate and a private key certificate) encrypted through an SM2 algorithm to the 5G secure communication module of the client device and an SSL gateway device of the master station.

After the distributing and writing of the relevant keys and CA certificates are completed, the integrated device is powered on and operates. The 5G secure communication module includes a baseband chip and integrates an open Linux operating system, installing a national secret SSL VPN SDK.

As mentioned earlier, the 5G secure communication module internally integrates a power-specific encryption chip. The process of interacting with the master station through the random-number based mutual encryption to generate the session key may be specifically implemented by the following steps S01 to S04.

In step S01, a client registration message is transmitted to the master station, where the client registration message includes a local random number randomly generated by the encryption chip.

In the process of establishing the encrypted data transmission tunnel, for better understanding, the 5G secure communication module of the client device may be regarded as a client device of an SSL VPN, and the SSL gateway device of the master station may be regarded as a server of the SSL VPN.

The 5G secure communication module transmits a client registration message to the SSL gateway device. The content of the client registration message may include SSL version information, the local random number R1 (obtained by the encryption chip), and a list of cipher suites (such as an SM2 encryption algorithm) supported by the local device.

In step S02, a registration response message, returned by the master station performing a registration verification based on the client registration message, is received. The registration response message includes a gateway random number randomly generated by the master station and a first public key certificate of the master station.

The 5G secure communication module receives a server registration response message returned by the SSL gateway device after the SSL gateway device performing a registration verification based on the client registration message. The server registration response message mainly includes determined SSL protocol version information, a type of encryption algorithm, the gateway random number R2 generated by the SSL gateway device, and the first public key certificate which is encrypted through the SM2 algorithm and is issued by a CA server of a power grid dispatching department.

In step S03, a legitimacy verification is performed on the first public key certificate, and after the legitimacy verification passes, a second public key certificate of the 5G secure communication module is transmitted to the master station to enable the master station to invoke the CA server of the power grid dispatching department to perform a security verification on the second public key certificate.

After receiving the first public key certificate transmitted by the SSL gateway device, the 5G secure communication module performs the legitimacy verification on the first public key certificate. For example, it is determined whether the certificate has expired, whether the CA server issuing the certificate is reliable, whether the returned public key certificate can decrypt the digital signature in the returned certificate, and whether a domain name matches.

After the legitimacy verification of the first public key certificate passes, to improve the reliability of security verification, the SSL gateway device requests to verify whether the second public key certificate issued by the CA server of the 5G secure communication module is legitimate. In such case, the 5G secure communication module transmits the second public key certificate to the SSL gateway device, so that the SSL gateway device invokes the CA server of the power grid dispatching department to verify whether the public key certificate of the 5G secure communication module is secure and reliable, thereby preventing hacker impersonation, and enhancing transmission reliability and security for both the 5G secure communication module and SSL gateway device.

In step S04, a security verification passing result is received from the master station, and the session key is generated by the encryption chip through a password digest algorithm based on the local random number, the gateway random number and a master control key of the encryption chip.

After the verification for the certificate of the 5G secure communication module passes, the 5G secure communication module transmits a request instruction to the encryption chip to obtain the session key. The session key is generated by using the master control key of the encryption chip, combined with the local random number R1 corresponding to the client device and the gateway random number R2 corresponding to the master station, through an SM3 password digest algorithm. The session key is an SM4 symmetric encryption key. Exemplarily, in this step, the session key is generated based on the master control key of the encryption chip and the random numbers R1 and R2, where the generation process includes: converting R1, R2, and the master control key in a base64 encoding manner to obtain R1', R2', and a master control key', and concatenating the R1', R2', and master control key' in a predetermined order, such as R1' + the master control key' + R2'.

Since both the local random number R1 and the gateway random number R2 are random numbers, the session key automatically changes according to a business duration to ensure session security. The session key is generated through a digest algorithm, which makes it impossible to obtain an original key by decryption, thereby maintaining secure data transmission.

The 5G communication module used in the conventional technology is not capable of establishing an encrypted tunnel with the master station, and data transmission is only processed by a MCU of the integrated device where the 5G communication module is located or a routing chip. In the embodiments of the present disclosure, the 5G secure communication module is embedded with a dedicated encryption chip and SDK, thereby enabling the capability to establish a VPN-encrypted tunnel with the master station.

Further, the process of encrypting the session key and transmitting the encrypted session key to the master station to establish an encrypted data transmission tunnel between the 5G secure communication module and the master station may be implemented by the following sub-steps S11 to S12.

In step S11, the session key is encrypted by using the first public key certificate to obtain a secondary encrypted session key.

The 5G secure communication module uses a public key in the first public key certificate transmitted by the SSL gateway device to encrypt the session key to obtain the secondary encrypted session key.

In step S12, the secondary encrypted session key is transmitted to the master station via a public network to enable the master station to decrypt the secondary encrypted session key by using a first private key certificate to obtain the session key, so as to establish the encrypted data transmission tunnel between the 5G secure communication module and the master station.

The 5G secure communication module transmits the secondary encrypted session key to the SSL gateway device via the public network, to enable the SSL gateway device to decrypt the secondary encrypted session key by using the first private key certificate to obtain the session key.

Based on the above, the client device and the master station respectively obtain the same session key, it is indicated that the encrypted data transmission tunnel is established between the client device and the master station. The session key may also serve as the symmetric encryption key for application-layer data secured through the SM4 algorithm, thereby providing the information security during the communication between the client device and the master station.

It should be noted that the local random number R1 and the gateway random number R2 remain valid after each encrypted tunnel is established until the encrypted tunnel expires. An expiration time of the encrypted tunnel may be set independently according to user's business needs. For example, the encrypted tunnel may be set to expire after 5 minutes. Before the next data communication, a new encrypted tunnel is to be established, requiring generation of new random numbers. When the expiration time is set sufficiently short (such as, approximately equal to a session duration for each data transmission), a shorter expiration time indicates a greater frequency of random number regeneration, and a greater real-time update frequency of the random numbers indicates a higher data transmission security between the two ends.

It can be understood that the frequency of random number regeneration increases, resulting in a certain computational burden on a processor. Therefore, within an allowable range, those skilled in the art may flexibly set the expiration time according to actual needs. For example, for scenarios where the security requirements for data transmission are low, the expiration time may be set longer; for scenarios where the security requirements for data transmission are high, the expiration time may be set shorter, which is not limited in the present disclosure.

In step 202, a mutual identity authentication is performed between the 5G secure communication module and the master station based on the session key.

Before performing encryption and decryption communication on the transmitted data between the client device and the master station, the mutual identity authentication between the 5G secure communication module of the client device and the master station is performed.

The process of performing the mutual identity authentication between the 5G secure communication module and the master station based on the session key may include two authentication processes: a master station identity authentication process and a client identity authentication process.

In an embodiment, the master station identity authentication process may be implemented by the following sub-steps S21 to S24.

In step S21, the encryption chip is invoked to obtain a first encryption random number, the first encryption random number is encrypted by using the session key to generate a first ciphertext, and the first ciphertext is transmitted to the master station.

In step S22, a third ciphertext transmitted by the master station is received. The third ciphertext is obtained through the following process: the master station decrypts the first ciphertext by using the session key to obtain the first encryption random number, invokes a cipher machine to encrypt the first encryption random number to obtain a second ciphertext, and encrypts the second ciphertext by using the session key to obtain the third ciphertext.

In S23, the third ciphertext is decrypted by using the session key to obtain the second ciphertext.

In S24, a master station identity authentication is performed on the second ciphertext by the encryption chip, and it is determined that the master station is a trusted master station if the master station identity authentication passes.

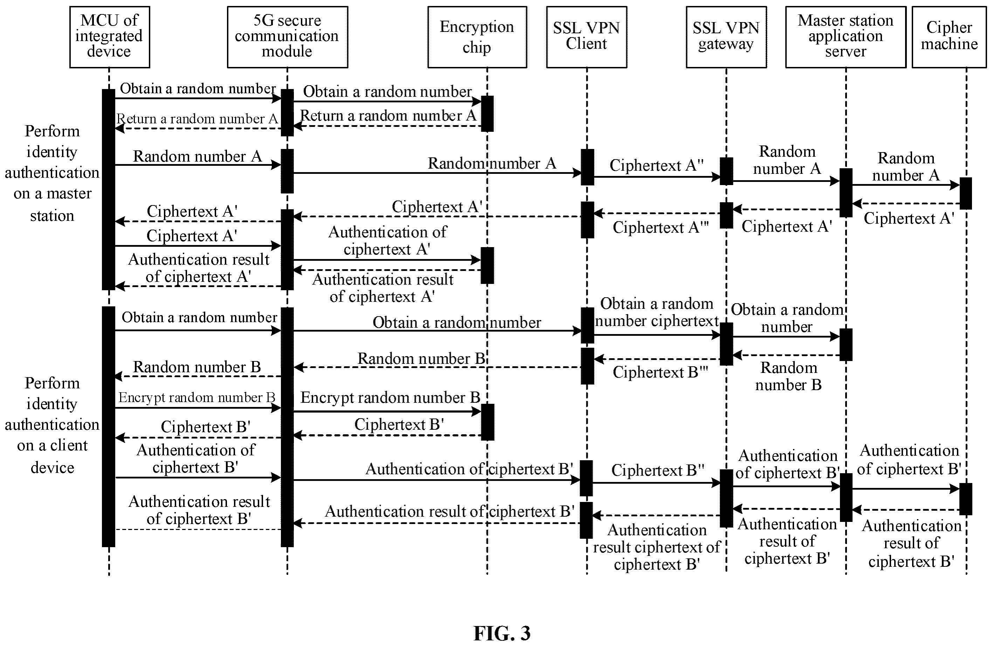

For illustration, for example, referring to FIG. 3, FIG. 3 is a schematic diagram showing the process of the mutual identity authentication between the 5G secure communication module and the master station.

Referring to FIG. 3, the master station identity authentication process is as follows.

The MCU of the integrated device in the client device invokes the encryption chip inside the 5G secure communication module to obtain the first encryption random number A.

The first encryption random number A is encrypted by the SSL VPN SDK of the client device (SSL VPN Client) to obtain the first ciphertext A" (using the session key as the encryption key).

On receipt of the first ciphertext A", the SSL VPN gateway device of the master station decrypts the first ciphertext A" using the session key (where the decryption key is the aforementioned session key) to obtain the first encryption random number A, and then transmits the first encryption random number A to a master station application server of the master station.

The master station application server invokes the cipher machine to encrypt the first encryption random number A using the master control key corresponding to the 5G secure communication module to obtain the second ciphertext A', and then transmits the second ciphertext A' to the SSL VPN gateway device.

The SSL VPN gateway device encrypts the second ciphertext A' using the session key to obtain the third ciphertext A"', and transmits the third ciphertext A"' to the SSL VPN SDK.

On receipt of the third ciphertext A"', the SSL VPN SDK decrypts the third ciphertext A"' using the session key to obtain the second ciphertext A' and returns the second ciphertext A' to the MCU of the integrated device.

The MCU of the integrated device transmits the second ciphertext A' returned by the master station to the 5G secure communication module, and the master station identity authentication is performed by the encryption chip.

If the master station identity authentication passes, it is determined that the master station is trusted and data is uploaded to the master station.

The client identity authentication process may be implemented by the following sub-steps S31 to S34.

In step S31, a fourth ciphertext transmitted by the master station is received. The fourth ciphertext is obtained through the following process: the master station randomly generates a second encryption random number and encrypts the second encryption random number by using the session key to obtain the fourth ciphertext.

In step S32, the fourth ciphertext is decrypted by using the session key to obtain the second encryption random number.

In step S33, the second encryption random number is encrypted by the encryption chip to obtain a fifth ciphertext.

In step S34, the fifth ciphertext is transmitted to the master station, to enable the master station to perform a client identity authentication on the fifth ciphertext by two continuous encryption and decryption authentications, and it is determined that the client device is a trusted client in response to the client identity authentication passes.

Referring to FIG. 3, the client identity authentication process is as follows.

The MCU of the integrated device transmits an obtaining random number instruction, the obtaining random number instruction is encrypted by the SSL VPN SDK by using the session key to obtain an obtaining random number ciphertext, and then the obtaining random number ciphertext is transmitted to the SSL VPN gateway device.

The SSL VPN gateway device decrypts the obtaining random number ciphertext by using the session key, and according to the decrypted obtaining random number instruction, invokes an obtaining random number interface of the master station application server to obtain the second encryption random number B.

The SSL VPN gateway device encrypts the second encryption random number B by using the session key to obtain the fourth ciphertext B"', and then transmits the fourth ciphertext B‴ to the SSL VPN SDK.

The SSL VPN SDK decrypts the fourth ciphertext B"' by using the session key to obtain the second encryption random number B, and transmits the second encryption random number B back to the MCU of the integrated device.

The MCU of the integrated device transmits the second encryption random number B to the encryption chip of the 5G secure communication module, the encryption chip encrypts the second encryption random number B to obtain the fifth ciphertext B'. Then, the encryption chip transmits the fifth ciphertext B' back to the MCU of the integrated device.

The MCU of the integrated device transmits the fifth ciphertext B' to the master station to enable the master station to perform the client identity authentication on the fifth ciphertext B' by two continuous encryption and decryption authentications, and the specific implementations are as follows. The SSL VPN SDK encrypts the fifth ciphertext B' by using the session key to obtain a sixth ciphertext B"; the SSL VPN gateway device decrypts the sixth ciphertext B" by using the session key to obtain the fifth ciphertext B'; the master station application server invokes the cipher machine to perform the client identity authentication on the fifth ciphertext B', to obtain an authentication result of the fifth ciphertext B'; the SSL VPN gateway device encrypts the authentication result of the fifth ciphertext B' by using the session key to obtain an authentication result ciphertext of the fifth ciphertext B'; the SSL VPN SDK decrypts the authentication result ciphertext of the fifth ciphertext B' by using the session key to obtain the authentication result of the fifth ciphertext B'; and the authentication result of the fifth ciphertext B' is returned back to the MCU of the integrated device.

If the authentication result of the fifth ciphertext B' indicates that the client identity authentication performed by the master station passes, it is determined that the client device is trusted and the master station receives data from the client device.

It should be noted that the authentications of both the master station and the client device (primarily the 5G secure communication module) are performed simultaneously. During the mutual identity authentication process, even if the encrypted data transmission tunnel has been previously established between the master station and the client device, and the session key is obtained, it is assumed that one of the master station and the client device fails the identity authentication or the authentication does not pass, subsequent data transmission fails to be implemented. Thus, the encrypted data transmission tunnel and the mutual identity authentication provide a dual security protection for data transmission between the master station and the client device, further enhancing the security and accuracy of data interaction.

In step 203, encryption and decryption communication is performed on application layer data between the client device and the master station by using the session key if the mutual identity authentication passes.

As previously mentioned, the 5G secure communication module further includes a baseband chip. When the client device transmits data to the master station (that is, the terminal/client encrypts and transmits data, and the master station receives and decrypts the data), the process of performing encryption and decryption communication on application layer data between the client device and the master station by using the session key may be implemented by the following sub-steps S41 to S43.

In step S41, when the client device transmits data to the master station, first to-be-transmitted data is obtained, and data segmentation, encryption, and data concatenation processing are performed on the first to-be-transmitted data in sequence by the baseband chip and the encryption chip to obtain first complete ciphertext data.

In step S42, a secondary encryption is performed on the first complete ciphertext data by using the session key to obtain second complete ciphertext data.

In step S43, the second complete ciphertext data is transmitted to the master station to enable the master station to: decrypt the second complete ciphertext data by using the session key to obtain the first complete ciphertext data, and invoke a cipher machine to decrypt the first complete ciphertext data to obtain the first to-be-transmitted data.

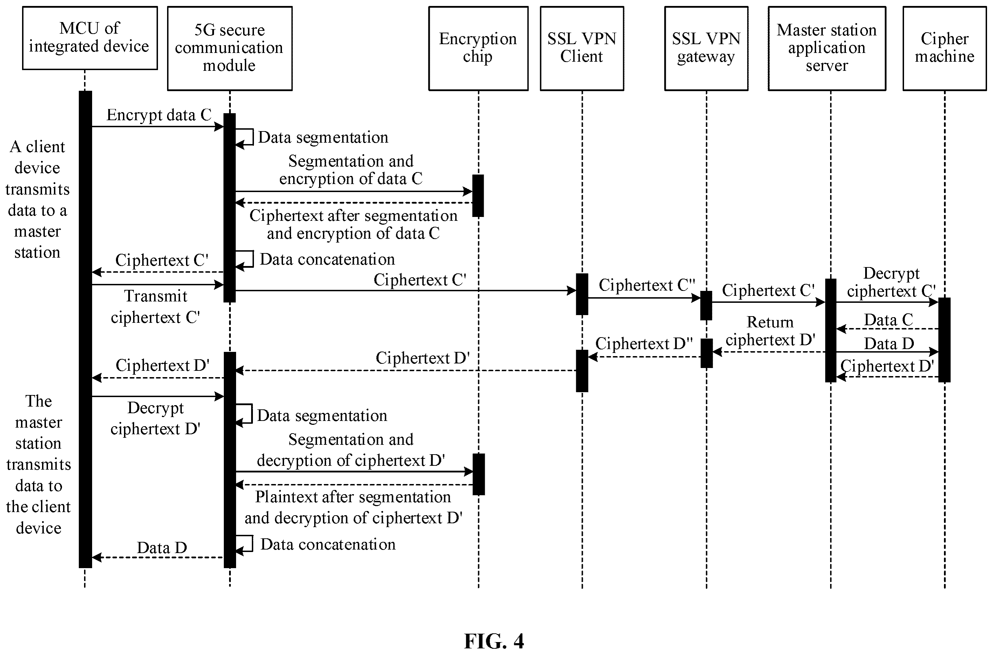

For illustration, for example, FIG. 4 is a schematic diagram showing a process of encryption and decryption communication for application layer data between a client device and a master station.

Referring to FIG. 4, when the client device transmits data to the master station, the process of encryption and decryption communication for application layer data between the client device and the master station includes: segmentation for data encryption, data encryption, data encryption of the client device, and data decryption of the master station, sequentially.

In the process of the segmentation for data encryption, the MCU of the integrated device transmits a plaintext of the first to-be-transmitted data C (that is, application layer data) to the 5G secure communication module; the baseband chip of the 5G secure communication module determines a length of the first to-be-transmitted data C and compares the length with a maximum byte length that the encryption chip can process in a single operation; and if data segmentation is required, the baseband chip divides the first to-be-transmitted data C into subdata1 to subdata n for subsequent processing.

In the process of the data encryption, the baseband chip of the 5G secure communication module sequentially transmits the subdata1 to subdata n to the encryption chip and invokes an SM4 encryption interface of the encryption chip; the encryption chip encrypts the subdata1 to subdata n by using an encryption key of the encryption chip (that is, the encryption key distributed by the key management system) to generate ciphertext data subdata1' to subdata n', and transmits the subdata1' to subdata n' to the baseband chip of the 5G secure communication module; and after collecting all data, the baseband chip concatenates the subdata1' to subdata n' into first complete ciphertext data C' and transmits the first complete ciphertext data C' to the MCU of the integrated device.

In the process of the data encryption of the client device, the MCU of the integrated device transmits the first complete ciphertext data C' to the 5G secure communication module and sets the working mode of the 5G secure communication module to a transmission mode; the 5G secure communication module transmits the first complete ciphertext data C' to a virtual network card of the SSL VPN SDK; and the SSL VPN SDK encrypts the first complete ciphertext data C' by using the session key to generate second complete ciphertext data C" and transmits the second complete ciphertext data C" to the SSL VPN gateway device.

In the process of the data decryption of the master station, on receipt of the second complete ciphertext data C", the SSL VPN gateway device decrypts the second complete ciphertext data C" by using the session key to obtain the first complete ciphertext data C', and uploads the first complete ciphertext data C' to the master station application server; and the master station application server invokes a decryption interface of the cipher machine to determine, based on which device (client device) the data is transmitted from, a decryption key corresponding to the client device and then decrypts the first complete ciphertext data C' by using the decryption key to obtain the plaintext of the first to-be-transmitted data C.

In another case, when the client device transmits data to the master station (that is, the terminal/client device encrypts and transmits data, and the master station receives and decrypts the data), the process of performing encryption and decryption communication on application layer data between the client device and the master station by using the session key may be implemented by the following sub-steps S51 to S53.

In step S51, fourth complete ciphertext data transmitted by the master station is received. The fourth complete ciphertext data is obtained through the following process: the master station invokes a cipher machine to encrypt second to-be-transmitted data to obtain third complete ciphertext data, and encrypts the third complete ciphertext data by using the session key to obtain the fourth complete ciphertext data.

In step S52, the fourth complete ciphertext data is decrypted by using the session key to obtain the third complete ciphertext data.

In step S53, data segmentation, decryption, and data concatenation are performed on the third complete ciphertext data in sequence by the baseband chip and the encryption chip to obtain the second to-be-transmitted data.

For example, referring to FIG. 4, when the master station transmits data to the client device, the process of encryption and decryption communication for application layer data between the client device and the master station includes the following steps.

It is assumed that a plaintext of the to-be-transmitted data of the master station is second to-be-transmitted data D, the master station application server invokes the cipher machine to encrypt the second to-be-transmitted data D by using an encryption key (that is, the encryption key distributed by the key management system to the cipher machine of the master station) to obtain third complete ciphertext data D'.

The master station application server transmits the third complete ciphertext data D' to the SSL VPN gateway device.

The SSL VPN gateway device encrypts the third complete ciphertext data D' by using the session key to obtain fourth complete ciphertext data D", and transmits the fourth complete ciphertext data D" to the SSL VPN SDK.

The SSL VPN SDK decrypts the fourth complete ciphertext data D" by using the session key to obtain the third complete ciphertext data D', and transmits the third complete ciphertext data D' to the MCU of the integrated device via the 5G secure communication module.

On receipt of the third complete ciphertext data D', the MCU of the integrated device transmits the third complete ciphertext data D' to the 5G secure communication module and sets the working mode of the 5G secure communication module to a decryption mode.

The baseband chip of the 5G secure communication module segments the third complete ciphertext data D' into d-subdatal to d-subdata n and transmits the d-subdatal to d-subdata n to the encryption chip.

The encryption chip decrypts the d-subdatal to d-subdata n by using a stored decryption key for decrypting data of the master station, and transmits decrypted data to the 5G secure communication module.

The 5G secure communication module concatenates the decrypted data into the plaintext of the second to-be-transmitted data D, and transmits the plaintext of the second to-be-transmitted data D to the MCU of the integrated device.

It should be noted that the 5G encrypted communication method introduced in the aforementioned embodiments is provided in view of data security. In practice, there may be cases where encryption of the transmitted data is unnecessary, and data is directly transmitted in plaintext. In such cases, those skilled in the art may choose, according to actual needs, either the plaintext transmission method or the method for transmitting data after encryption via the encryption module provided in the embodiments of the present disclosure. It can be understood that no limitation is imposed in this regard according to the present disclosure.

A 5G encrypted communication method, applied to a client device, is provided according to the embodiments of the present disclosure. During a data communication process, the client device interacts with a master station through random-number based mutual encryption to generate a session key, encrypts the session key, and transmits the encrypted session key to the master station to establish an encrypted data transmission tunnel between a 5G secure communication module and the master station. A mutual identity authentication is performed between the 5G secure communication module and the master station based on the session key. Encryption and decryption communication is performed on application layer data between the client device and the master station by using the session key in response to the mutual identity authentication passing. By establishing the encrypted data transmission tunnel and performing the mutual identity authentication, dual encryption of an application layer and a link layer is constructed, further improving the security of data transmission. Based on the 5G secure communication module and the 5G encrypted communication method provided according to the present disclosure, interaction between the power terminal device and a power service is achieved, enabling remote security management for multiple different terminal devices. In addition, access status analysis and secure data transmission may be performed based on the 5G secure communication module, meeting the requirement for secure access of a distributed resource to a power service master station.

Correspondingly, a 5G encrypted communication method, applied to a master station, is taken as an example for description below. The master station is communicatively connected to at least one client device; and each of the at least one client device includes a 5G secure communication module.

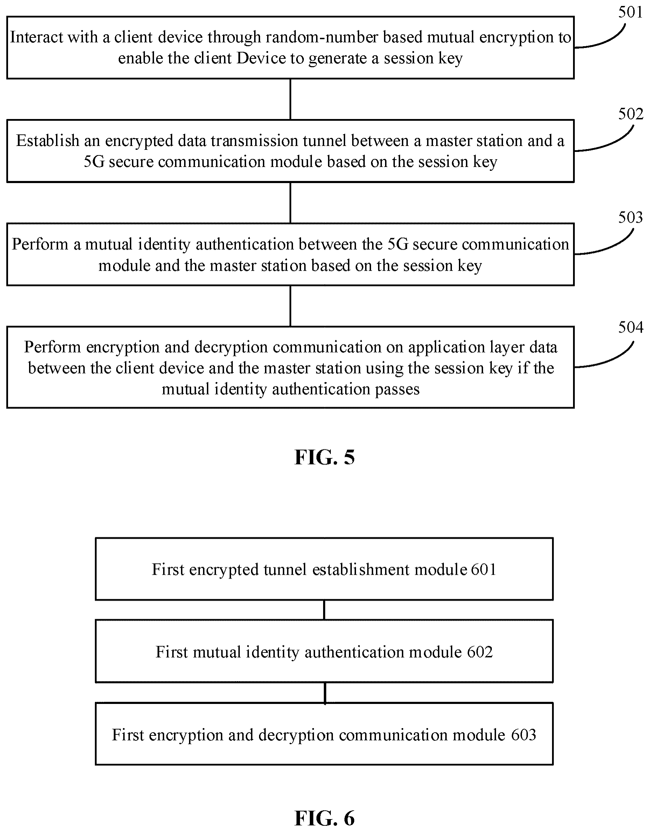

For any one of the at least one client device, referring to FIG. 5, FIG. 5 is a flowchart showing steps of a 5G encrypted communication method according to another embodiment of the present disclosure, including the following steps 501 to 504.

In step 501, perform interaction with the client device through random-number based mutual encryption to enable the client device to generate a session key.

Combined with the aforementioned description of offline key distribution for the client device, similarly, for the master station, before the session key is generated through the random-number based encryption, offline distributing and writing of encryption and decryption keys on the cipher machine of the master station by the key management system, and a second CA certificate is distributed. The second CA certificate includes a first public key certificate and a first private key certificate of the master station.

The distributing and writing of keys and CA certificates may be referred to the relevant content of step 201 in the aforementioned embodiment, which will not be repeated here.

Combined with the aforementioned content, the 5G secure communication module internally integrates a power-specific encryption chip. Furthermore, the master station includes an SSL gateway device. The process of interacting with the client device through random-number based mutual encryption to enable the client device to generate a session key may be implemented by the following sub-steps S61 to S65.

In step S61, a client registration message transmitted by the client device is received, where the client registration message includes a local random number, and the local random number is randomly generated by the encryption chip.

Similarly, the 5G secure communication module of the client device may be regarded as a client device of an SSL VPN, and the SSL gateway device of the master station may be regarded as a server of the SSL VPN.

The SSL gateway device receives the client registration message transmitted by the 5G secure communication module. The content of the client registration message may include SSL version information, the local random number R1 (obtained by the encryption chip), and a list of cipher suites (such as an SM2 encryption algorithm) supported by the local device.

In step S62, a registration verification is performed on the client registration message, and after the registration verification passes, a gateway random number is randomly generated based on the SSL gateway device.

On receiving the client registration message, the SSL gateway device performs a registration verification on the client registration message, such as checking the SSL version information and determining a type of encryption algorithm. After the registration verification passes, the gateway random number R2 is randomly generated.

In step S63, the gateway random number and a first public key certificate of the master station are integrated into a registration response message, and the registration response message is transmitted to the client device to enable the client device to perform a legitimacy verification on the first public key certificate.

The server registration response message is transmits to the 5G secure communication module of the client device, so that the 5G secure communication module performs the legitimacy verification on the first public key certificate. The serve registration response message includes the determined SSL protocol version information and the type of encryption algorithm, the gateway random number R2 generated by the SSL gateway device, and the first public key certificate which is encrypted through the SM2 algorithm and is issued by a CA server of a power grid dispatching department.

In step S64, a second public key certificate of the 5G secure communication module transmitted by the client device after the legitimacy verification passes is received, and the CA server of the power grid dispatching department is invoked to perform a security verification on the second public key certificate.

On receiving the second public key certificate of the 5G secure communication module, the CA server of the power grid dispatching department is invoked to perform the security verification on the second public key certificate, thereby preventing hacker impersonation, and enhancing transmission reliability and security for both the 5G secure communication module and SSL gateway device.

In step S65, after the security verification passes, a security verification result is transmitted to the client device to enable the client device to generate the session key via the encryption chip through a password digest algorithm based on the local random number, the gateway random number and a master control key of the encryption chip.

After generating the session key, the client device encrypts the session key by using the first public key certificate to obtain a secondary encrypted session key.

The session key transmitted from the client device is generated by using the master control key of the encryption chip in the 5G secure communication module, combined with the local random number R1 corresponding to the client device and the gateway random number R2 corresponding to the master station, through the SM3 password digest algorithm. The session key is an SM4 symmetric encryption key.

In step 502, an encrypted data transmission tunnel between the master station and the 5G secure communication module is established based on the session key.

In an embodiment, the establishing an encrypted data transmission tunnel between the master station and the 5G secure communication module based on the session key may include: receiving a secondary encrypted session key transmitted by the client device, where the secondary encrypted session key is obtained by the client device encrypting the session key; and decrypting the secondary encrypted session key to obtain the session key, to establish the encrypted data transmission tunnel between the master station and the 5G secure communication module.

Combined with the aforementioned content, the master station corresponds to the first private key certificate issued by the CA server. The decrypting the secondary encrypted session key to obtain the session key, to establish the encrypted data transmission tunnel between the master station and the 5G secure communication module may include: decrypting the secondary encrypted session key by using the first private key certificate to obtain the session key, to establish the encrypted data transmission tunnel between the master station and the 5G secure communication module.

In step 503, a mutual identity authentication is performed between the 5G secure communication module and the master station based on the session key.

Combined with the aforementioned content, the process of performing the mutual identity authentication between the 5G secure communication module and the master station based on the session key includes a master station identity authentication process and a client identity authentication process.

In an embodiment, combined with the master station identity authentication process described in the 5G encrypted communication method which is applied to the client device, for the method applied to the master station, the master station identity authentication may be implemented by the following sub-steps S71 to S75.

In step S71, a first ciphertext transmitted by the client device is received, where the first ciphertext is generated by the client device, and the generating process is as follows: the client device invokes the encryption chip to obtain a first encryption random number and encrypts the first encryption random number by using the session key to obtain the first ciphertext.

In step S72, the first ciphertext is decrypted by using the session key to obtain the first encryption random number.

In step S73, a cipher machine is invoked to encrypt the first encryption random number to obtain a second ciphertext.

In step S74, the second ciphertext is encrypted by using the session key to obtain a third ciphertext.

In step S75, the third ciphertext is transmitted to the client device to enable the client device to: decrypt the third ciphertext by using the session key to obtain the second ciphertext, perform a master station identity authentication on the second ciphertext via the encryption chip, and determine that the master station is a trusted master station in response to the master station identity authentication passing.

In an embodiment, combined with the client identity authentication process described in the 5G encrypted communication method which is applied to the client device, for the method applied to the master station, the client identity authentication may be implemented by the following sub-steps S81 to S83.

In step S81, a second encryption random number is randomly generated, the second encryption random number is encrypted by using the session key to obtain a fourth ciphertext, and the fourth ciphertext is transmitted to the client device.

In step S82, a fifth ciphertext transmitted by the client device is received, where the fifth ciphertext is obtained by the client device, and the obtaining process is as follows: the client device decrypts the fourth ciphertext by using the session key to obtain the second encryption random number, and encrypts the second encryption random number via the encryption chip to obtain the fifth ciphertext.

In step S83, a client identity authentication is performed on the fifth ciphertext by two continuous encryption and decryption authentications, and it is determined that the client device is a trusted client device in response to the client identity authentication passing.

In step 504, encryption and decryption communication is performed on application layer data between the client device and the master station by using the session key if the mutual identity authentication passes.

Combined with the encryption and decryption communication process described in the 5G encrypted communication method applied to the client device according to the aforementioned embodiments where the client device transmits data to the master station (the terminal/client device encrypts and transmits data, and the master station receives and decrypts the data), for the method applied to the master station, the corresponding encryption and decryption communication process may be implemented by the following sub-steps S91 to S93.

In step S91, second complete ciphertext data transmitted by the client device is received, where the second complete ciphertext data is obtained through the following process: the client device performs data segmentation, encryption, and data concatenation on first to-be-transmitted data via the baseband chip and the encryption chip to obtain first complete ciphertext data, and performs a secondary encryption on the first complete ciphertext data by using the session key to obtain the second complete ciphertext data.

In step S92, the second complete ciphertext data is decrypted by using the session key to obtain the first complete ciphertext data.

In step S93, the cipher machine is invoked to decrypt the first complete ciphertext data to obtain the first to-be-transmitted data.

Similarly, combined with the encryption and decryption communication process described in the 5G encrypted communication method applied to the client device according to the aforementioned embodiments where the master station transmits data to the client device (the master station encrypts and transmits data, and the terminal/client device receives and decrypts the data), for method applied to the master station, the corresponding encryption and decryption communication process may be implemented by the following sub-steps S101 to S104.

In step S101, second to-be-transmitted data is obtained when the master station transmits data to the client device.

In step S102, the cipher machine is invoked to encrypt the second to-be-transmitted data to obtain third complete ciphertext data.

In step S103, the third complete ciphertext data is encrypted by using the session key to obtain fourth complete ciphertext data.

In step S104, the fourth complete ciphertext data is transmitted to the client device enable the client device to: decrypt the fourth complete ciphertext data by using the session key to obtain the third complete ciphertext data, and perform data segmentation, decryption, and data concatenation on the third complete ciphertext data in sequence via the baseband chip and the encryption chip to obtain the second to-be-transmitted data.

It should be noted that, in order to make those skilled in the art to better distinguish data of a same type but with different actual meanings, some technical features in the embodiments of the present disclosure are distinguished and described by using terms such as "first" and "second". The terms "first" and "second" are only used for data distinction and have no other special meanings. It can be understood that the terms are not limited in the present disclosure.

In the embodiments of the present disclosure, a 5G encrypted communication method, applied to a master station, is provided. During a data communication process, the master station interacts with a client device through random-number based mutual encryption, so as to enable the client device to generate a session key and encrypt the session key to obtain a secondary encrypted session key; receives the secondary encrypted session key transmitted by the client device, and decrypts the secondary encrypted session key to obtain the session key, so as to establish an encrypted data transmission tunnel between the master station and the 5G secure communication module. A mutual identity authentication is performed between the 5G secure communication module and the master station by using the session key. Encryption and decryption communication is performed on application layer data between the client device and the master station by using the session key if the mutual identity authentication passes. By establishing the encrypted data transmission tunnel and performing the mutual identity authentication, dual encryption of an application layer and a link layer is constructed, further improving the security of data transmission. Based on the 5G secure communication module and the 5G encrypted communication method provided according to the present disclosure, interaction between the power terminal device and a power service is achieved, enabling remote security management for multiple different terminal devices. In addition, access status analysis and secure data transmission may be performed based on the 5G secure communication module, meeting the requirement for secure access of a distributed resource to a power service master station.

Referring to FIG. 6, FIG. 6 is a structural block diagram of a 5G encrypted communication apparatus according to an embodiment of the present disclosure. The 5G encrypted communication apparatus is applied to a client device, and the client device includes a 5G secure communication module. The 5G encrypted communication apparatus specifically includes a first encrypted tunnel establishment module 601, a first mutual identity authentication module 602, and a first encryption and decryption communication module 603.

The first encrypted tunnel establishment module 601 is configured to interact with a master station through random-number based mutual encryption to generate a session key, encrypt the session key, and transmit the encrypted session key to the master station to establish an encrypted data transmission tunnel between the 5G secure communication module and the master station.

The first mutual identity authentication module 602 is configured to perform a mutual identity authentication between the 5G secure communication module and the master station based on the session key.

The first encryption and decryption communication module 603 is configured to perform encryption and decryption communication on application layer data between the client device and the master station by using the session key in response to the mutual identity authentication passing.

In an embodiment, the 5G secure communication module internally integrates an encryption chip, and the first encrypted tunnel establishment module 601 includes a client registration message transmission module, a registration response message receiving module, a legitimacy verification module, and a session key generation module.

The client registration message transmission module is configured to transmit a client registration message to the master station, where the client registration message includes a local random number randomly generated by the encryption chip.

The registration response message receiving module is configured to receive a registration response message returned by the master station performing a registration verification based on the client registration message, where the registration response message includes a gateway random number randomly generated by the master station and a first public key certificate of the master station.

The legitimacy verification module is configured to perform a legitimacy verification on the first public key certificate, and transmit, after the legitimacy verification passes, a second public key certificate of the 5G secure communication module to the master station, to enable the master station to invoke a CA server of a power grid dispatching department to perform a security verification on the second public key certificate.

The session key generation module is configured to receive a security verification passing result from the master station, and generate the session key via the encryption chip through a password digest algorithm based on the local random number, the gateway random number and a master control key of the encryption chip.

In an embodiment, the first encrypted tunnel establishment module 601 further includes a secondary encrypted session key generation module and a secondary encrypted session key transmission module.

The secondary encrypted session key generation module is configured to encrypt the session key by using the first public key certificate to obtain a secondary encrypted session key.

The secondary encrypted session key transmission module is configured to transmit the secondary encrypted session key to the master station via a public network to enable the master station to decrypt the secondary encrypted session key by using a first private key certificate to obtain the session key, so as to establish the encrypted data transmission tunnel between the 5G secure communication module and the master station.

In an embodiment, the first mutual identity authentication module 602 includes a first ciphertext generation module, a third ciphertext receiving module, a third ciphertext decryption module, a master station identity authentication module, a fourth ciphertext receiving module, a fourth ciphertext decryption module, a fifth ciphertext generation module, and a fifth ciphertext transmission module.

The first ciphertext generation module is configured to invoke the encryption chip to obtain a first encryption random number, encrypt the first encryption random number by using the session key to generate a first ciphertext, and transmit the first ciphertext to the master station.

The third ciphertext receiving module is configured to receive a third ciphertext transmitted by the master station, where the third ciphertext is obtained by: the master station decrypting the first ciphertext by using the session key to obtain the first encryption random number, invoking a cipher machine to encrypt the first encryption random number to obtain a second ciphertext, and encrypting the second ciphertext by using the session key.

The third ciphertext decryption module is configured to decrypt the third ciphertext by using the session key to obtain the second ciphertext.

The master station identity authentication module is configured to perform a master station identity authentication on the second ciphertext via the encryption chip, and determine that the master station is a trusted master station in response to the master station identity authentication passing.

The fourth ciphertext receiving module is configured to receive a fourth ciphertext transmitted by the master station, where the fourth ciphertext is obtained by: the master station randomly generating a second encryption random number and encrypting the second encryption random number by using the session key.

The fourth ciphertext decryption module is configured to decrypt the fourth ciphertext by using the session key to obtain the second encryption random number.

The fifth ciphertext generation module is configured to encrypt the second encryption random number via the encryption chip to obtain a fifth ciphertext.

The fifth ciphertext transmission module is configured to transmit the fifth ciphertext to the master station to enable the master station to: perform a client identity authentication on the fifth ciphertext through two continuous encryption and decryption authentications, and determine that the client device is a trusted client device in response to the client identity authentication passing.

In an embodiment, the 5G secure communication module further includes a baseband chip, and the first encryption and decryption communication module 603 includes a first complete ciphertext data generation module, a second complete ciphertext data generation module, and a second complete ciphertext data transmission module.

The first complete ciphertext data generation module is configured to obtain first to-be-transmitted data when the client device transmits data to the master station, and perform data segmentation, encryption, and data concatenation on the first to-be-transmitted data in sequence via the baseband chip and the encryption chip to obtain first complete ciphertext data.

The second complete ciphertext data generation module is configured to perform a secondary encryption on the first complete ciphertext data by using the session key to obtain second complete ciphertext data.

The second complete ciphertext data transmission module is configured to transmit the second complete ciphertext data to the master station to enable the master station to: decrypt the second complete ciphertext data by using the session key to obtain the first complete ciphertext data, and invoke a cipher machine to decrypt the first complete ciphertext data to obtain the first to-be-transmitted data..

In an embodiment, the 5G secure communication module further includes a baseband chip, and the first encryption and decryption communication module 603 includes a fourth complete ciphertext data receiving module, a fourth complete ciphertext data decryption module, and a third complete ciphertext data processing module.

The fourth complete ciphertext data receiving module is configured to receive fourth complete ciphertext data transmitted by the master station, where the fourth complete ciphertext data is obtained by: the master station invoking a cipher machine to encrypt second to-be-transmitted data to obtain third complete ciphertext data, and encrypting the third complete ciphertext data by using the session key.

The fourth complete ciphertext data decryption module is configured to decrypt the fourth complete ciphertext data by using the session key to obtain the third complete ciphertext data.

The third complete ciphertext data processing module is configured to perform data segmentation, decryption, and data concatenation processing on the third complete ciphertext data via the baseband chip and the encryption chip in sequence to obtain the second to-be-transmitted data.

In an embodiment, the 5G encrypted communication apparatus further includes a first key distribution module. The first key distribution module is configured to perform offline distributing and writing of encryption and decryption keys on the 5G secure communication module via a key management system, and distribute a first CA certificate, where the first CA certificate includes the second public key certificate of the 5G secure communication module.

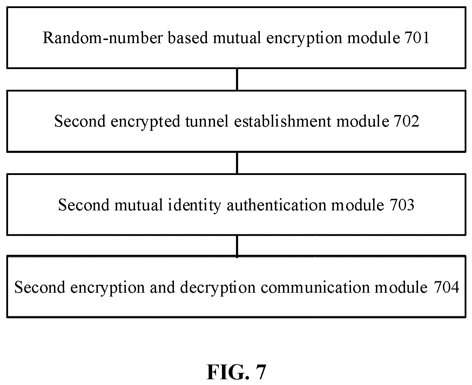

Referring to FIG. 7, FIG. 7 is a structural block diagram of a 5G encrypted communication apparatus according to an embodiment of the present disclosure. The 5G encrypted communication apparatus is applied to a master station. The master station is communicatively connected to at least one client device, each of the at least one client device includes a 5G secure communication module, and for any one of the at least one client device, the 5G encrypted communication apparatus includes a random-number based mutual encryption module 701, a second encrypted tunnel establishment module 702, a second mutual identity authentication module 703, and a second encryption and decryption communication module 704.

The random-number based mutual encryption module 701 is configured to configured to interact with the client device through random-number based mutual encryption to enable the client device to generate a session key.

The second encrypted tunnel establishment module 702 is configured to establish an encrypted data transmission tunnel between the master station and the 5G secure communication module based on the session key.

The second mutual identity authentication module 703 is configured to perform a mutual identity authentication between the 5G secure communication module and the master station based on the session key.

The second encryption and decryption communication module 704 is configured to perform encryption and decryption communication on application layer data between the client device and the master station by using the session key in response to the mutual identity authentication passing.

In an embodiment, the second encrypted tunnel establishment module 702 includes a secondary encrypted session key receiving module and a secondary encrypted session key decryption module.

The secondary encrypted session key receiving module is configured to receive a secondary encrypted session key transmitted by the client device, where the secondary encrypted session key is obtained by the client device encrypting the session key.

The secondary encrypted session key decryption module is configured to decrypt the secondary encrypted session key to obtain the session key, to establish the encrypted data transmission tunnel between the master station and the 5G secure communication module.

In an embodiment, the 5G secure communication module internally integrates an encryption chip, the master station includes an SSL gateway device, and the random-number based mutual encryption module 701 includes a client registration message receiving module, a gateway random number generation module, a registration response message transmission module, a second public key certificate security verification module, and a security verification result transmission module.

The client registration message receiving module is configured to receive a client registration message transmitted by the client device, where the client registration message includes a local random number, and the local random number is randomly generated by the encryption chip.

The gateway random number generation module is configured to perform a registration verification on the client registration message, and randomly generate, after the registration verification passes, a gateway random number based on the SSL gateway device.

The registration response message transmission module is configured to integrate the gateway random number and a first public key certificate of the master station into a registration response message, and transmit the registration response message to the client device to enable the client device to perform a legitimacy verification on the first public key certificate.

The second public key certificate security verification module is configured to receive a second public key certificate of the 5G secure communication module transmitted by the client device after the legitimacy verification passes, and invoke a CA server of a power grid dispatching department to perform a security verification on the second public key certificate.

The security verification result transmission module is configured to transmit, in response to the security verification passing, a security verification result to the client device to enable the client device to: generate the session key via the encryption chip through a password digest algorithm based on the local random number, the gateway random number and a master control key of the encryption chip.

In an embodiment, the master station corresponds to a first private key certificate, and the secondary encrypted session key decryption module is specifically configured to decrypt the secondary encrypted session key by using the first private key certificate to obtain the session key, to establish the encrypted data transmission tunnel between the master station and the 5G secure communication module.

In an embodiment, the second mutual identity authentication module 703 includes a first ciphertext receiving module, a first ciphertext decryption module, a second ciphertext generation module, a second ciphertext encryption module, a third ciphertext transmission module, a second encryption random number encryption module, a fifth ciphertext receiving module, and a client identity authentication module.

The first ciphertext receiving module is configured to receive a first ciphertext transmitted by the client device, where the first ciphertext is obtained by: the client device invoking the encryption chip to obtain a first encryption random number and encrypting the first encryption random number by using the session key.

The first ciphertext decryption module is configured to decrypt the first ciphertext by using the session key to obtain the first encryption random number.

The second ciphertext generation module is configured to invoke a cipher machine to encrypt the first encryption random number to obtain a second ciphertext.

The second ciphertext encryption module is configured to encrypt the second ciphertext by using the session key to obtain a third ciphertext.

The third ciphertext transmission module is configured to transmit the third ciphertext to the client device to enable the client device to: decrypt the third ciphertext by using the session key to obtain the second ciphertext, perform a master station identity authentication on the second ciphertext via the encryption chip, and determine that the master station is a trusted master station in response to the master station identity authentication passing.

The second encryption random number encryption module is configured to randomly generate a second encryption random number, encrypt the second encryption random number by using the session key to obtain a fourth ciphertext, and transmit the fourth ciphertext to the client device.

The fifth ciphertext receiving module is configured to receive a fifth ciphertext transmitted by the client device, where the fifth ciphertext is obtained by: the client device decrypting the fourth ciphertext by using the session key to obtain the second encryption random number, and encrypting the second encryption random number via the encryption chip.

The client identity authentication module is configured to perform a client identity authentication on the fifth ciphertext through two continuous encryption and decryption authentications, and determine that the client device is a trusted client in response to the client identity authentication passing.

In an embodiment, the 5G secure communication module further includes a baseband chip, and the second encryption and decryption communication module 704 includes a second complete ciphertext data receiving module, a second complete ciphertext data decryption module, and a first complete ciphertext data decryption module.

The second complete ciphertext data receiving module is configured to receive second complete ciphertext data transmitted by the client device, where the second complete ciphertext data is obtained by: the client device performing data segmentation, encryption, and data concatenation on first to-be-transmitted data via the baseband chip and the encryption chip to obtain first complete ciphertext data, and performing a secondary encryption on the first complete ciphertext data by using the session key.

The second complete ciphertext data decryption module is configured to decrypt the second complete ciphertext data by using the session key to obtain the first complete ciphertext data.

The first complete ciphertext data decryption module is configured to invoke a cipher machine to decrypt the first complete ciphertext data to obtain the first to-be-transmitted data.

In an embodiment, the 5G secure communication module further includes a baseband chip, and the second encryption and decryption communication module 704 includes a second to-be-transmitted data obtaining module, a second to-be-transmitted data encryption module, a third complete ciphertext data encryption module, and a fourth complete ciphertext data transmission module.

The second to-be-transmitted data obtaining module is configured to obtain second to-be-transmitted data when the master station transmits data to the client device.

The second to-be-transmitted data encryption module is configured to invoke a cipher machine to encrypt the second to-be-transmitted data to obtain third complete ciphertext data.

The third complete ciphertext data encryption module is configured to encrypt the third complete ciphertext data by using the session key to obtain fourth complete ciphertext data.

The fourth complete ciphertext data transmission module is configured to transmit the fourth complete ciphertext data to the client device to enable the client device to: decrypt the fourth complete ciphertext data by using the session key to obtain the third complete ciphertext data, and perform data segmentation, decryption, and data concatenation on the third complete ciphertext data in sequence via the baseband chip and the encryption chip to obtain the second to-be-transmitted data.

In an embodiment, the 5G encrypted communication apparatus further includes a second key distribution module. The second key distribution module is configured to perform offline distributing and writing of encryption and decryption keys on the cipher machine of the master station via a key management system, and distribute a second CA certificate, where the second CA certificate includes the first public key certificate and the first private key certificate of the master station.

Apparatus embodiments, which are similar to the method embodiments, are described briefly, and reference may be made to the description of the method embodiments.

An electronic device is provided according to the embodiments of the present disclosure. The electronic device includes a processor and a memory. The memory is configured to store program codes and transmit the program code to the processor. The processor is configured to perform the 5G encrypted communication method according to any one of the embodiments in the present disclosure based on an instruction in the program codes.

A computer-readable storage medium is provided according to the embodiments of the present disclosure. The computer-readable storage medium stores program codes. The program codes are to perform the 5G encrypted communication method according to any one the embodiments in the present disclosure.

Those skilled in the art may clearly understand that, for convenience and brevity of description, for a detailed operation process of the foregoing system, apparatus and unit, reference may be made to a corresponding process in the foregoing embodiments of the method, which is not repeated herein.

In the embodiments provided in the present disclosure, it can be understood that the disclosed system, apparatus, and method may be implemented in other manners. For example, the apparatus embodiments described above are only schematic. For example, the division of the units is only a logical functional division, and there may be other division methods in actual implementation. For example, multiple units or components may be combined or integrated into another system, or some features may be ignored or not be executed. In addition, the couplings or direct couplings or communication connections shown or discussed may be indirect couplings or communication connections through some interfaces, apparatuses or units, and may be in electrical, mechanical or in other forms.

The above unit described as a separate component may be or may be not separated physically. The component displayed as a unit may be or may be not a physical unit, that is, may be located at one place or may be distributed on multiple network units. Some or all of the units may be selected according to actual needs to achieve the objectives of the technical solutions according to the embodiments of the present disclosure.

In addition, all functional units according to the embodiment of the present disclosure may be integrated into one processing unit, or may be a physically separate unit, or two or more units are integrated into one unit. The above integrated units may be implemented in a form of hardware or software functional units.

In a case that the integrated unit is implemented in the form of a software functional unit and is sold or used as an independent product, the integrated unit may be stored in a computer-readable storage medium. Based on such understanding, the essence of the technical solutions of the present disclosure, or parts of the technical solutions which contribute to the conventional technology or all or parts of the technical solutions may be embodied in a form of a software product. The computer software product is stored in a storage medium, and includes several instructions which enable a computer device (such as a personal computer, a server, or a network device) to perform all or part of the steps of the method according to the embodiments of the present disclosure. The storage medium includes various media that can store program codes, such as a U disk, a mobile hard disk, a read-only memory (ROM), a random access memory (RAM), a magnetic disk, or an optical disk.

In summary, the above embodiments are only for illustrating the technical solutions of the present disclosure, and are not intended to limit the present disclosure. Although the present disclosure is illustrated in detail with reference to the embodiments described above, it should be understood by those skilled in the art that modification can be made to the technical solutions recited in the embodiments described above, or equivalent substitution can be made onto a part of technical features of the technical solutions. The modifications and equivalent replacements will not make the essence of the corresponding technical solutions deviate from the spirit and scope of the technical solutions of the embodiments of the present disclosure.

## Claims

1. A 5G encrypted communication method,
applied to a client device, which comprises a 5G secure communication module,
wherein the 5G encrypted communication method comprises:
interacting with a master station through random-number based mutual encryption to generate a session key;
encrypting the session key, and transmitting the encrypted session key to the master station to establish an encrypted data transmission tunnel between the 5G secure communication module and the master station;
performing a mutual identity authentication between the 5G secure communication module and the master station based on the session key; and
performing encryption and decryption communication on application layer data between the client device and the master station by using the session key in response to the mutual identity authentication passing.

2. The 5G encrypted communication method according to claim 1, wherein the 5G secure communication module internally integrates an encryption chip, and the interacting with a master station through random-number based mutual encryption to generate a session key comprises:
transmitting a client registration message to the master station, wherein the client registration message comprises a local random number randomly generated by the encryption chip;
receiving a registration response message returned by the master station performing a registration verification based on the client registration message, wherein the registration response message comprises a gateway random number randomly generated by the master station and a first public key certificate of the master station;
performing a legitimacy verification on the first public key certificate, and transmitting, after the legitimacy verification passes, a second public key certificate of the 5G secure communication module to the master station, to enable the master station to invoke a CA server of a power grid dispatching department to perform a security verification on the second public key certificate; and
receiving a security verification passing result from the master station, and generating the session key via the encryption chip through a password digest algorithm based on the local random number, the gateway random number and a master control key of the encryption chip.

3. The 5G encrypted communication method according to claim 2, wherein the encrypting the session key, and transmitting the encrypted session key to the master station to establish an encrypted data transmission tunnel between the 5G secure communication module and the master station comprises:
encrypting the session key by using the first public key certificate to obtain a secondary encrypted session key; and
transmitting the secondary encrypted session key to the master station via a public network, to enable the master station to:
decrypt the secondary encrypted session key by using a first private key certificate to obtain the session key,
to establish the encrypted data transmission tunnel between the 5G secure communication module and the master station.

4. The 5G encrypted communication method according to claim 2, wherein the performing a mutual identity authentication between the 5G secure communication module and the master station based on the session key comprises:
invoking the encryption chip to obtain a first encryption random number;
encrypting the first encryption random number by using the session key to generate a first ciphertext;
transmitting the first ciphertext to the master station;
receiving a third ciphertext transmitted by the master station, wherein the third ciphertext is obtained by: the master station decrypting the first ciphertext by using the session key to obtain the first encryption random number, invoking a cipher machine to encrypt the first encryption random number to obtain a second ciphertext, and encrypting the second ciphertext by using the session key;
decrypting the third ciphertext by using the session key to obtain the second ciphertext;
performing a master station identity authentication on the second ciphertext via the encryption chip, and determining that the master station is a trusted master station in response to the master station identity authentication passing;
receiving a fourth ciphertext transmitted by the master station, wherein the fourth ciphertext is obtained by: the master station randomly generating a second encryption random number and encrypting the second encryption random number by using the session key;
decrypting the fourth ciphertext by using the session key to obtain the second encryption random number;
encrypting the second encryption random number via the encryption chip to obtain a fifth ciphertext; and
transmitting the fifth ciphertext to the master station, to enable the master station to:
perform a client identity authentication on the fifth ciphertext through two continuous encryption and decryption authentications, and
determine that the client device is a trusted client device in response to the client identity authentication passing.

5. The 5G encrypted communication method according to claim 2, wherein the 5G secure communication module further comprises a baseband chip, and the performing encryption and decryption communication on application layer data between the client device and the master station by using the session key comprises:
obtaining first to-be-transmitted data when the client device transmits data to the master station, and performing data segmentation, encryption, and data concatenation on the first to-be-transmitted data in sequence via the baseband chip and the encryption chip to obtain first complete ciphertext data;
performing a secondary encryption on the first complete ciphertext data by using the session key to obtain second complete ciphertext data; and
transmitting the second complete ciphertext data to the master station to enable the master station to:
decrypt the second complete ciphertext data by using the session key to obtain the first complete ciphertext data, and invoke a cipher machine to decrypt the first complete ciphertext data to obtain the first to-be-transmitted data.

6. The 5G encrypted communication method according to claim 2, wherein the 5G secure communication module further comprises a baseband chip, and the performing encryption and decryption communication on application layer data between the client device and the master station by using the session key comprises:
receiving fourth complete ciphertext data transmitted by the master station, wherein the fourth complete ciphertext data is obtained by: the master station invoking a cipher machine to encrypt second to-be-transmitted data to obtain third complete ciphertext data, and encrypting the third complete ciphertext data by using the session key;
decrypting the fourth complete ciphertext data by using the session key to obtain the third complete ciphertext data; and
performing data segmentation, decryption, and data concatenation on the third complete ciphertext data in sequence via the baseband chip and the encryption chip to obtain the second to-be-transmitted data.

7. The 5G encrypted communication method according to any one of claims 2 to 6, further comprising:
performing offline distributing and writing of encryption and decryption keys on the 5G secure communication module via a key management system, and distributing a first CA certificate, wherein the first CA certificate comprises the second public key certificate of the 5G secure communication module.

8. A 5G encrypted communication method,
applied to a master station, wherein the master station is communicatively connected to at least one client device, each of the at least one client device comprises a 5G secure communication module, and
for any one of the at least one client device, the 5G encrypted communication method comprises:
interacting with the client device through random-number based mutual encryption to enable the client device to generate a session key;
establishing an encrypted data transmission tunnel between the master station and the 5G secure communication module based on the session key;
performing a mutual identity authentication between the 5G secure communication module and the master station based on the session key; and
performing encryption and decryption communication on application layer data between the client device and the master station by using the session key in response to the mutual identity authentication passing.

9. The 5G encrypted communication method according to claim 8, wherein the establishing an encrypted data transmission tunnel between the master station and the 5G secure communication module based on the session key comprises:
receiving a secondary encrypted session key transmitted by the client device, wherein the secondary encrypted session key is obtained by the client device encrypting the session key; and
decrypting the secondary encrypted session key to obtain the session key, to establish the encrypted data transmission tunnel between the master station and the 5G secure communication module.

10. The 5G encrypted communication method according to claim 8, wherein the 5G secure communication module internally integrates an encryption chip, the master station comprises an SSL gateway device, and the interacting with the client device through random-number based mutual encryption to enable the client device to generate a session key comprises:
receiving a client registration message transmitted by the client device, wherein the client registration message comprises a local random number, and the local random number is randomly generated by the encryption chip;
performing a registration verification on the client registration message, and randomly generating, after the registration verification passes, a gateway random number via the SSL gateway device;
integrating the gateway random number and a first public key certificate of the master station into a registration response message, and transmitting the registration response message to the client device to enable the client device to perform a legitimacy verification on the first public key certificate;
receiving a second public key certificate of the 5G secure communication module transmitted by the client device after the legitimacy verification passes, and invoking a CA server of a power grid dispatching department to perform a security verification on the second public key certificate; and
transmitting, in response to the security verification passing, a security verification result to the client device to enable the client device to:
generate the session key via the encryption chip through a password digest algorithm based on the local random number, the gateway random number and a master control key of the encryption chip.

11. The 5G encrypted communication method according to claim 9, wherein the master station corresponds to a first private key certificate, and the decrypting the secondary encrypted session key to obtain the session key, to establish the encrypted data transmission tunnel between the master station and the 5G secure communication module comprises:
decrypting the secondary encrypted session key by using the first private key certificate to obtain the session key, to establish the encrypted data transmission tunnel between the master station and the 5G secure communication module.

12. The 5G encrypted communication method according to claim 10, wherein the performing a mutual identity authentication between the 5G secure communication module and the master station based on the session key comprises:
receiving a first ciphertext transmitted by the client device, wherein the first ciphertext is obtained by: the client device invoking the encryption chip to obtain a first encryption random number and encrypting the first encryption random number by using the session key;
decrypting the first ciphertext by using the session key to obtain the first encryption random number;
invoking a cipher machine to encrypt the first encryption random number to obtain a second ciphertext;
encrypting the second ciphertext by using the session key to obtain a third ciphertext;
transmitting the third ciphertext to the client device to enable the client device to:
decrypt the third ciphertext by using the session key to obtain the second ciphertext, perform a master station identity authentication on the second ciphertext via the encryption chip, and determine that the master station is a trusted master station in response to the master station identity authentication passing;
randomly generating a second encryption random number, encrypting the second encryption random number by using the session key to obtain a fourth ciphertext, and transmitting the fourth ciphertext to the client device;
receiving a fifth ciphertext transmitted by the client device, wherein the fifth ciphertext is obtained by: the client device decrypting the fourth ciphertext by using the session key to obtain the second encryption random number, and encrypting the second encryption random number via the encryption chip; and
performing a client identity authentication on the fifth ciphertext through two continuous encryption and decryption authentications, and determining that the client device is a trusted client in response to the client identity authentication passing.

13. The 5G encrypted communication method according to claim 10, wherein the 5G secure communication module further comprises a baseband chip, and the performing encryption and decryption communication on application layer data between the client device and the master station by using the session key comprises:
receiving second complete ciphertext data transmitted by the client device, wherein the second complete ciphertext data is obtained by: the client device performing data segmentation, encryption, and data concatenation on first to-be-transmitted data via the baseband chip and the encryption chip to obtain first complete ciphertext data, and performing a secondary encryption on the first complete ciphertext data by using the session key;
decrypting the second complete ciphertext data by using the session key to obtain the first complete ciphertext data; and
invoking a cipher machine to decrypt the first complete ciphertext data to obtain the first to-be-transmitted data.

14. The 5G encrypted communication method according to claim 10, wherein the 5G secure communication module further comprises a baseband chip, and the performing encryption and decryption communication on application layer data between the client device and the master station by using the session key comprises:
obtaining second to-be-transmitted data when the master station transmits data to the client device;
invoking a cipher machine to encrypt the second to-be-transmitted data to obtain third complete ciphertext data;
encrypting the third complete ciphertext data by using the session key to obtain fourth complete ciphertext data; and
transmitting the fourth complete ciphertext data to the client device to enable the client device to:
decrypt the fourth complete ciphertext data by using the session key to obtain the third complete ciphertext data, and perform data segmentation, decryption, and data concatenation on the third complete ciphertext data in sequence via the baseband chip and the encryption chip to obtain the second to-be-transmitted data.

15. The 5G encrypted communication method according to any one of claims 10 to 14, further comprising:
performing offline distributing and writing of encryption and decryption keys on the cipher machine of the master station via a key management system, and distributing a second CA certificate, wherein the second CA certificate comprises the first public key certificate and the first private key certificate of the master station.

16. A 5G encrypted communication apparatus, applied to a client device, wherein the client device comprises a 5G secure communication module, and the 5G encrypted communication apparatus comprises:
a first encrypted tunnel establishment module, configured to interact with a master station through random-number based mutual encryption to generate a session key, encrypt the session key, and transmit the encrypted session key to the master station to establish an encrypted data transmission tunnel between the 5G secure communication module and the master station;
a first mutual identity authentication module, configured to perform a mutual identity authentication between the 5G secure communication module and the master station based on the session key; and
a first encryption and decryption communication module, configured to perform encryption and decryption communication on application layer data between the client device and the master station by using the session key in response to the mutual identity authentication passing.

17. A 5G encrypted communication apparatus, applied to a master station, wherein the master station is communicatively connected to at least one client device, each of the at least one client device comprises a 5G secure communication module, and
for any one of the at least one client device, the 5G encrypted communication apparatus comprises:
a random-number based mutual encryption module, configured to interact with the client device through random-number based mutual encryption to enable the client device to generate a session key;
a second encrypted tunnel establishment module, configured to establish an encrypted data transmission tunnel between the master station and the 5G secure communication module based on the session key;
a second mutual identity authentication module, configured to perform a mutual identity authentication between the 5G secure communication module and the master station based on the session key; and
a second encryption and decryption communication module, configured to perform encryption and decryption communication on application layer data between the client device and the master station by using the session key in response to the mutual identity authentication passing.

18. An electronic device, comprising:
a processor, and
a memory, wherein
the memory is configured to store program codes and transmit the program codes to the processor; and
the processor is configured to perform the 5G encrypted communication method according to any one of claims 1 to 15 based on an instruction in the program codes.

19. A computer-readable storage medium, storing program codes, wherein the program codes are to perform the 5G encrypted communication method according to any one of claims 1 to 15.
